**Europäisches Patentamt**

**European Patent Office**

**Office européen des brevets**

(19)

(11) Veröffentlichungsnummer: **0 279 371**
**B1**

(12) **EUROPÄISCHE PATENTSCHRIFT**

(45) Veröffentlichungstag der Patentschrift:
04.04.90

(21) Anmeldenummer: 88102068.9

(22) Anmeldetag: 12.02.88

(51) Int. Cl.⁴: **B29C 59/12**, B29C 71/04,
H01T 19/04
// B29L7:00, B29L22:00

(54) **Verfahren und Anordnung zur Oberflächenvorbehandlung von Kunststoff mittels einer elektrischen Koronaentladung.**

(30) Priorität: 20.02.87 DE 3705482

(43) Veröffentlichungstag der Anmeldung:
24.08.88 Patentblatt 88/34

(45) Bekanntmachung des Hinweises auf die Patenterteilung:
04.04.90 Patentblatt 90/14

(84) Benannte Vertragsstaaten:
BE DE FR GB IT LU NL SE

(56) Entgegenhaltungen:
EP-A- 0 160 889
DE-A- 2 022 913
DE-A- 3 247 795
DE-B- 1 284 620
GB-A- 1 095 837
GB-A- 1 215 234
GB-A- 1 526 918
US-A- 3 274 089

(73) Patentinhaber: HOECHST AKTIENGESELLSCHAFT,
Postfach 80 03 20, D-6230 Frankfurt am Main 80(DE)

(72) Erfinder: Dinter, Peter, Dipl.-Ing., Am Wiesenberg 4,
D-6227 Hallgarten(DE)
Erfinder: Bothe, Lothar, Dr. Dipl.-Chem., Am
Heiligenhaus 9, D-6500 Mainz-Gonsenheim(DE)
Erfinder: Gribbin, John Derek, Dr. Dipl.-Chem.,
Birkenweg 16, D-6229 Schlangenbad(DE)

## Beschreibung

Die Erfindung betrifft ein Verfahren zur Oberflächenvorbehandlung von Kunststoff mittels einer elektrischen Koronaentladung, die zwischen spannungsführenden Elektroden und einer geerdeten Gegenelektrode abläuft, zwischen denen der Kunststoff sich befindet, sowie eine Anordnung hierfür.

In vielen Fällen bereitet die normalerweise glatte Oberfläche von Kunststoffen, insbesondere von Folien, insofern Schwierigkeiten, als die Folienbahnen mit extrem gutem Schlupf leicht dazu neigen, beim Aufrollen auf einen Wickel zu teleskopieren. Weitere Schwierigkeiten aufgrund der glatten Oberflächen von Folien bzw. Kunststoffen ergeben sich bei der Veredelung dieser Materialien, zur Steigerung der Adhäsion von Druckfarben, Lacken, Klebern, aufgedampften Metallen und dergleichen. Um diese zu überwinden, gehört es zum Stand der Technik, chemisch-physikalische Oberflächemodifizierungen von Kunststoffen vorzunehmen, insbesondere von Folien. Ein grundsätzliches Verfahren, das nur Veränderungen auf der Kunststoffoberfläche herbeiführt, besteht in einer Vorbehandlung der Kunststoffoberfläche durch eine elektrische Koronaentladung. So erfolgt nach der DE-OS 32 47 795 eine Koronavorbehandlung einer Kunststoff-Folienbahn in der Weise, daß die Folienbahn auf der Oberseite und/oder der Unterseite einer Koronabeaufschlagung unterzogen wird, die unterschiedliche Vorbehandlungsintensitäten ergibt. Hierzu wird die zu behandelnde Folienbahn über eine elektrisch geerdete Walze geführt und die elektrischen Ladungen durch Beaufschlagen der der Walzenoberfläche abgewandten Seite der Folienbahn mit einer elektrischen Koronaentladung vorgenommen, die durch das Anlegen eines hochfrequenten Wechselstroms hoher Spannung an eine im Abstand zur Walze angeordnete Elektrode erzeugt wird. Die Vorbehandlung erfolgt im allgemeinen unter Luft bei Atmosphärendruck.

Die ständig steigenden Forderungen des Marktes nach Produkten mit verbesserten Oberflächeneigenschaften führten auch zur Entwicklung von Verfahren unter Einsatz von chemisch reaktionsfähigen Substanzen, die beispielsweise bestimmte chemische Bindungen in der Oberfläche aufbrechen und dadurch die Oberflächeneigenschaften von Kunststoffen verändern. In der US-PS 3,142,630 ist ein Verfahren zur Vergrößerung der Adhäsion beschrieben, bei dem eine Folienbahn durch eine nicht-ionisierende Flüssigkeit geführt wird und in der Flüssigkeit einer Koronaentladung ausgesetzt wird. Diese Flüssigkeit kann beispielsweise ein Transformatorkühlöl, pflanzliches Öl oder ein sonstiges reines Öl, frei von Verunreinigungen, sein, das weitgehend elektrisch nicht leitend ist.

In der GB-PS 938 325 ist ein Verfahren zur Vorbehandlung von thermoplastischen Folien beschrieben, bei dem eine elektrische Koronaentladung auf der Oberfläche in einer Stickstoffatmosphäre erfolgt. Der Stickstoff wird über Verteilungsleitungen durch hohle Elektrodenleitungen in die Koronaentladungszone eingeleitet.

Bei der Anordnung, die in der US-PS 3,274,089 beschrieben ist, werden durch Verteilungsleitungen organische Verbindungen aus der Gruppe polymerisierbare organische Verbindungen, nicht-polymerisierbare organische Verbindungen mit ersetzbaren Wasserstoffatomen, perhalogenierte Wasserstoff in die Koronaentladungszone eingeleitet, um die Oberfläche von Folienbahnen oder Gegenständen aus Polymeren zu modifizieren.

Diesen bekannten Verfahren ist gemeinsam, reaktionsfähige Gase in den Koronaentladungsbereich zwischen den Elektroden einzuleiten, bzw. die Koronaentladung in einer nicht-leitenden Flüssigkeit ablaufen zu lassen.

Aus der japanischen Patentschrift 17 747/73 ist eine Vorrichtung bekannt, in der eine Folienoberfläche einer Koronaentladung ausgesetzt wird. Die mit dem Generator verbundene Elektrode besteht aus porösen Sintermetallen und aus mehreren Metallnetzen. Die Entladungselektrode ist so geformt, daß sich in ihr zugeführte Flüssigkeit sammelt und gespeichert wird. Durch die angelegte Spannung an die Entladungselektrode wird die gespeicherte Flüssigkeit in die Gasphase übergeführt und tritt aus den porösen Sintermetallen in Form von Gasteilchen aus, die sich unter dem Einfluß der elektrischen Feldlinien der Koronaentladung auf die Folienoberfläche hin bewegen.

Bei den Vorrichtungen und Verfahren, die eine Flüssigkeit als die Entladungselektrode in den Koronaentladungsvorgang mit einbeziehen, ergibt sich die Notwendigkeit, auf spezielle Vorrichtungen zurückgreifen zu müssen, die ein Speichern bzw. Sammeln der Flüssigkeit ermöglichen und darüber hinaus aus einem Material bestehen müssen, das einen Durchtritt der in die Gasphase übergeführten Flüssigkeit in die Koronaentladungszone zuläßt. Wird die vorzubehandelnde Folienbahn durch eine Flüssigkeit hindurchgeführt, in der die Koronaentladung stattfindet, so wird offensichtlich die Transportgeschwindigkeit der Folienbahn durch die Flüssigkeit begrenzt. Erfolgt eine Koronaentladung in reaktiver Atmosphäre auf die Kunststoffoberfläche, so können anschließend verschiedene Schichten zum Veredeln der Kunststoffoberfläche durch weitere Verfahrensmaßnahmen aufgebracht werden. Ein gleichzeitiges Beschichten mit der Vorbehandlung ist in solch einem Fall nicht möglich. Das gleiche gilt für eine Vorbehandlung von Kunststoffoberflächen, bei der die Koronaentladung auf die Oberfläche in einer Flüssigkeit durchgeführt wird.

Aufgabe der Erfindung ist es, ein Verfahren und eine Anordnung, wie sie eingangs beschrieben sind, so zu gestalten, daß Kunststoffoberflächen mit reaktiven Substanzen in flüssiger Form vorbehandelt werden können, wobei diese Substanzen zugleich auch als spezielle Schichten zum Veredeln der Kunststoffoberflächen auf diese appliziert werden können.

Diese Aufgabe wird erfindungsgemäß durch das eingangs beschriebene Verfahren in der Weise gelöst, daß in die Koronaentladungszone mittels eines Luft- oder Gasstroms ein Aerosol, gebildet durch die Zerstäubung einer Flüssigkeit, eingebracht wird.

Die weitere Ausgestaltung des Verfahrens ergibt sich aus den Ansprüchen 2 bis 10.

Eine erfindungsgemäße Anordnung zur Oberflächenvorbehandlung von Kunststoff mittels einer elektrischen Koronaentladung, mit von einem Generator mit einem hochfrequenten Wechselstrom hoher Spannung beaufschlagten Elektroden, die im Abstand zu einer geerdeten Gegenelektrode angeordnet sind, zeichnet sich dadurch aus, daß die Elektroden einer ersten Koronaentladungseinrichtung gegenüber der Umgebung durch ein Gehäuse abgeschirmt sind, das über eine Leitung mit einer Zerstäubereinrichtung zum Zerstäuben von Flüssigkeit zu einem schwebfähigen Aerosol verbunden ist, und daß ein in der Durchsatzmenge regulierbares Gebläse an die Zerstäubereinrichtung angeschlossen ist und das Trägergas für das Aerosol durch die Zerstäubereinrichtung hindurch in die Koronaentladungseinrichtung fördert.

In Ausgestaltung der Anordnung besteht die Zerstäubereinrichtung aus einem piezoelektrisch arbeitenden Ultraschwingsystem bzw. weist die Zerstäubereinrichtung mit Ultraschallgeschwindigkeit arbeitende Zweistoff-Zerstäuberdüsen auf.

Die Weiterbildung der erfindungsgemäßen Anordnung ergibt sich aus dem Merkmalen der Ansprüche 14 bis 28.

Durch die Koronaentladung werden Reaktionsmechanismen ausgelöst, die eine chemische Oberflächenmodifizierung des behandelten Kunststoffes bewirken. Je nach Art der eingesetzten Aerosolflüssigkeit und des Trägergases für das Aerosol werden auf der behandelten Kunststoffoberfläche aktive Zentren in Form funktioneller Gruppen und Radikalen erzeugt, die für nachfolgende Vorgänge Reaktionspartner für die aufgebrachten Substanzen darstellen. Je nach Art der verwendeten Aerosole und Trägergase lassen sich so auf der Kunststoffoberfläche auch polymerisierbare bzw. vernetzende Schichten in einem einzelnen Verfahrensschritt aufbringen.

Einzelheiten des Verfahrens nach der Erfindung sowie von Ausführungsbeispielen der erfindungsgemäßen Anordnung werden im folgenden anhand der Zeichnungen näher erläutert.

Es zeigen:

Figur 1 eine schematische Ansicht einer Anordnung zur Oberflächenvorbehandlung von Kunststoff mittels einer elektrischen Koronaentladung,

Figur 2 eine schematische Ansicht einer Anordnung zur Oberflächenvorbehandlung von Kunststoffen, die zwei Koronaentladungseinrichtungen umfaßt,

Figur 3 eine schematische Ansicht einer weiteren Anordnung zur Oberflächenvorbehandlung von Kunststoffen mit zwei Koronaentladungseinrichtungen,

Figur 4 eine andere Ausführungsform der Anordnung nach der Erfindung, mit einer einzigen Koronaentladungseinrichtung zur Oberflächenvorbehandlung einer Kunststoffschmelze,

Figur 5a eine weitere Ausführungsform der Anordnung mit einer Koronaentladungseinrichtung zur Oberflächenvorbehandlung des Inneren von Kunststoff-Formkörpern, und

Figur 5b eine abgewandelte Ausgestaltung eines Bauteils der Koronaentladungseinrichtung nach Figur 5a.

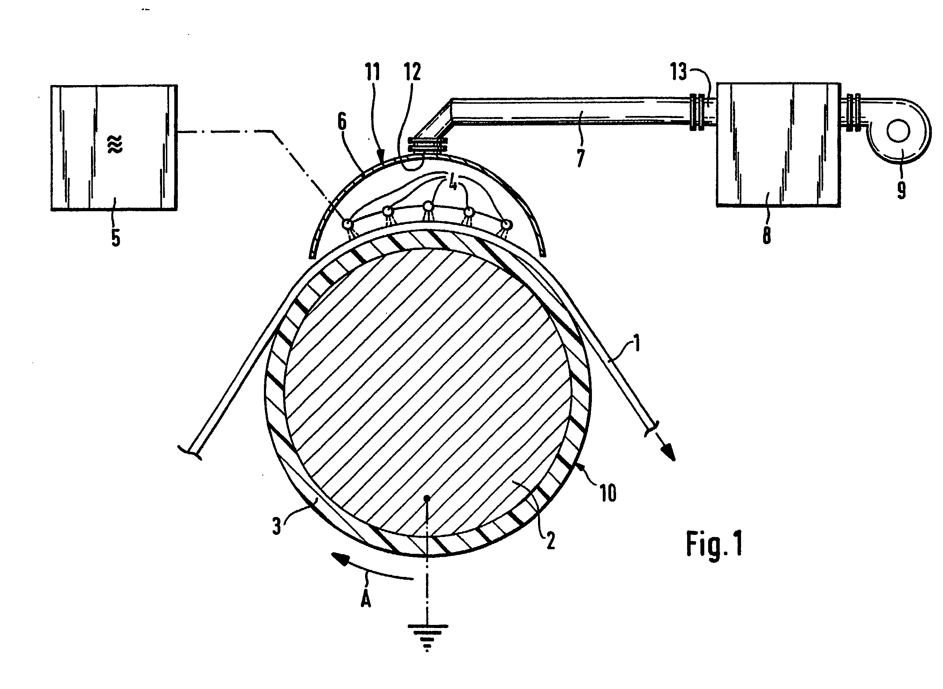

Figur 1 zeigt eine Anordnung, bestehend aus einer Walze 10, über die eine zu behandelnde Folienbahn 1 geführt ist, und einer ersten Koronaentladungseinrichtung 11, die ein Gehäuse 6 und Elektroden 4 umfaßt, die an einen Generator 5 angeschlossen sind. Die Walze besteht aus einem metallischen Walzenkern 2 und einer auf diesem aufgebrachten dielektrischen Beschichtung 3. Der Walzenkern 2 ist geerdet, so daß die Walze 10 die Gegenelektrode zu den Elektroden 4 der Koronaentladungseinrichtung 11 bildet. Der Abstand zwischen den Elektroden 4 und der Folienbahn 1 beträgt bis zu etwa 2 mm. Die Walze 10 dreht sich in Richtung des Pfeils A. Der Generator 5 beaufschlagt die Elektroden 4 mit einem hochfrequenten Wechselstrom hoher Spannung. Dadurch wird zwischen der geerdeten Walze 10 und den Elektroden 4 eine elektrische Koronaentladung gezündet, durch deren Feldlinien, die in Figur 1 schematisch angedeutet sind, die Folienbahn 1 hindurchgeführt wird. Gegenüber der Umgebung sind die Elektroden 4 durch das Gehäuse 6 abgeschirmt, das über eine Leitung 7, beispielsweise eine starre Rohrleitung oder eine Schlauchleitung oder sonstige flexible Leitung, mit einer Zerstäubereinrichtung 8 verbunden ist. Die Leitung 7 ist an einen Rohrstutzen 12 des Gehäuses 6 einerseits und an einen Rohrstutzen 13 der Zerstäubereinrichtung 8 andererseits angeschlossen. In der Zerstäubereinrichtung 8 erfolgt die Zerstäubung der jeweils einzubringenden Flüssigkeit in ein schwebfähiges Aerosol, das mittels eines von einem in der Durchsatzmenge regulierbaren Gebläses 9 gelieferten Luft- bzw. Trägergasstromes in die Koronaentladungseinrichtung 11 transportiert wird. Bei der Zerstäubereinrichtung 8 handelt es sich um an und für sich bekannte Zweistoff-Zerstäuberdüsen, bei denen die Flüssigkeit durch das mit Schallgeschwindigkeit austretende Trägergas, beispielsweise Luft, in winzige Tröpfchen zerrissen wird, oder um piezoelektrische Ultraschallschwingsysteme, die durch ihre Schwingungen das Trägergas bzw. die Luft in entsprechende Schwingungen versetzen, um die Flüssigkeit in winzige Tröpfchen zerreißen zu können. Das Gebläse 9 ist unmittelbar an die Zerstäubereinrichtung 8 angeflanscht. Das in das Gehäuse 6 der Koronaentladungseinrichtung 11 eingebrachte bzw. eingeblasene Aerosol verteilt sich gleichmäßig im Inneren des Gehäuses 6 und wandert entlang den Feldlinien, die von den Elektroden 4 in Richtung Folienbahn 1 verlaufen, auf die Folienoberfläche und wird dort niedergeschlagen. Es ergibt sich dadurch eine sehr gleichmäßige Benetzung bzw. Beschichtung der Folienbahn 1 mit dem Aerosol, wodurch eine sehr gleichmäßige Modifizierung der Oberflächeneigenschaften der Folienbahn erfolgt.

Die Elektroden 4 weisen als Entladungselektroden eine offene Bauweise auf, d.h. eine Elektrodenform mit hinreichend großem freien Querschnitt zwischen den einzelnen Elektroden. Hierfür haben sich achsparallel zum Umfang der Walze 10 angeordnete Drahtelektroden gut bewährt. Neben der Oberflächenaktivierung der Folienbahn können spezielle Beschichtungen auf die Folienbahn appliziert werden. Hierzu reichen in vielen Fällen extrem dünne Schichten aus, um die Oberflächeneigenschaften, wie zum Beispiel die Antistatik, Abhäsivität, Abriebfestigkeit, Haft- und Gleitreibungsverhalten, Barriereverhalten, Adhäsion, Haftvermittlung, einer Folie in gewünschter Weise zu verändern. Hier bieten sich u.a. zur Herstellung der Aerosole, neben Monomeren, Dispersionen, Lösungen nieder- und/oder hochmolekularer Komponenten und kolloidale Systeme an, die in wäßriger Form, oder in Lösungsmitteln gelöst, eingesetzt werden können.

Die Elektroden 4 der Koronaentladungseinrichtung 11 werden von dem Generator 5 mit einer Wechselspannung zwischen 5000 V und 25000 V beaufschlagt, wobei die zwischen den Elektroden 4 und der Walze 10 bzw. deren Walzenkern 2 als geerdete Gegenelektrode anliegende Wechselspannung proportional zu der Transportgeschwindigkeit der Folienbahn 1 durch die Koronaentladungseinrichtung 11 gewählt wird. Untersuchungen haben gezeigt, daß mit höherer Transportgeschwindigkeit auch die anliegende Wechselspannung, die der Generator 5 liefert, erhöht werden muß, um eine gleichmäßige Oberflächenmodifikation der Folienbahn 1 zu erreichen. Wird beispielsweise ein Antistatikum auf die Folienbahn 1 aufgesprüht, so zeigt sich beispielsweise, daß bei einer Generatorspannung von 5000 V und einer Transportgeschwindigkeit, die von 20 m/min auf 40 m/min und zuletzt 60 m/min erhöht wird, der mittlere Oberflächenwiderstand von $8,5 \times 10^7$ über $4 \times 10^8$ auf $7 \times 10^9$ Ohm•m ansteigt. Die unbeschichtete Folienoberfläche hat im allgemeinen einen mittleren Oberflächenwiderstand von $1 \times 10^{13}$ Ohm•m. Beträgt die Generatorspannung 15000 V, so ändert sich bei einem Anstieg der Transportgeschwindigkeit von 20 m/min über 40 m/min bis zu 60 m/min der mittlere Oberflächenwiderstand von $5 \times 10^7$ über $1 \times 10^8$ zu $3 \times 10^8$ Ohm•m. Diese Veränderungen lassen erkennen, daß eine Erhöhung der Transportgeschwindigkeit der Folienbahn 1 Hand in Hand mit einer Erhöhung der angelegten Generatorspannung gehen muß, um den mittleren Oberflächenwiderstand der mit Antistatikum beschichteten Folienbahn 1 in etwa konstant zu halten. Dieser Zusammenhang zwischen der Transportgeschwindigkeit und der angelegten Generatorspannung ist offensichtlich dadurch gegeben, daß bei höherer Transportgeschwindigkeit der Folienbahn 1 zugleich mehr Antistatikum auf die Folienbahn aufgesprüht werden muß, um eine gleichmäßige Beschichtung der Oberfläche der Folienbahn zu erhalten. Die Erhöhung der zugeführten Menge an Antistatikum wird durch eine Erhöhung der angelegten Generatorspannung erreicht (siehe Tabelle 2).

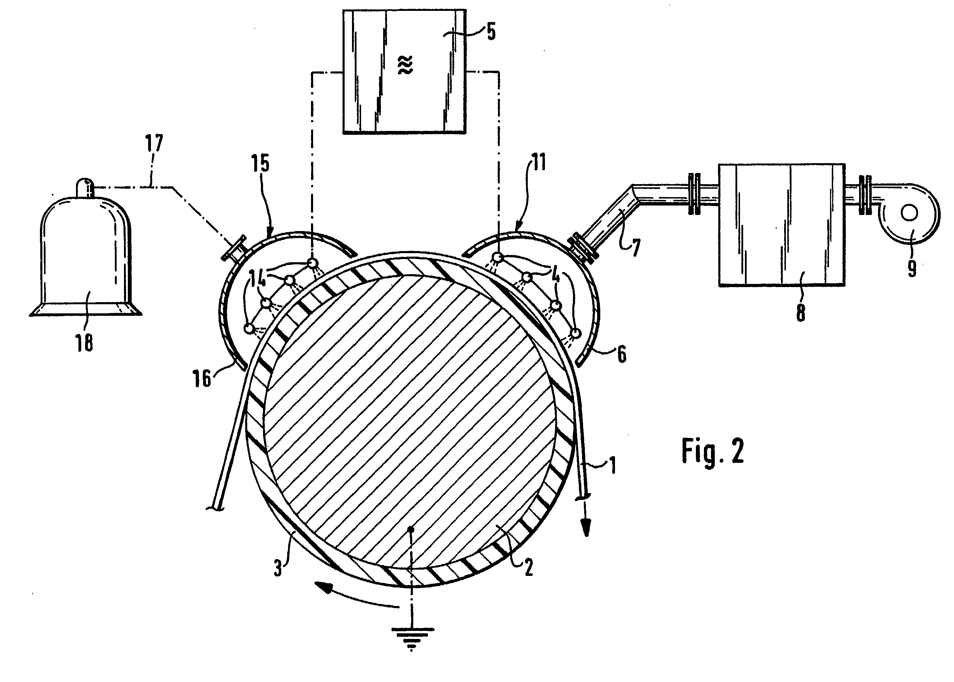

Figur 2 zeigt eine Ausführungsform der Erfindung, die ähnlich zu Figur 1 aufgebaut ist und bei der in Transportrichtung der Folienbahn 1 vor der ersten Koronaentladungseinrichtung 11 eine zweite Koronaentladungseinrichtung 15 angeordnet ist. Die Elektroden 14 der zweiten Koronaentladungseinrichtung sind durch ein Gehäuse 16 abgeschirmt, das über eine Leitung 17 mit einem Gasbehälter 18 verbunden ist. Der Generator 5 speist sowohl die Elektroden 4 der ersten Koronaentladungseinrichtung 11 als auch die Elektroden 14 der zweiten Koronaentladungseinrichtung 15. Die übrigen Bauteile dieser Anordnung, wie die Zerstäubereinrichtung 8 und das Gebläse 9, stimmen mit den entsprechenden Bauteilen der Anordnung nach Figur 1 überein und werden daher nicht nochmals beschrieben.

Bei der Anordnung nach Figur 2 erfolgt eine kombinierte Vorbehandlung der Folienbahn 1, die zunächst im Bereich der zweiten Koronaentladungseinrichtung 15 einer Koronaentladung in reaktiver Atmosphäre ausgesetzt wird, d.h. einer Oberflächenmodifizierung der Folienbahn 1 vor der Behandlung durch das Aufbringen eines Aerosols auf die Folienoberfläche mittels der Koronaentladung in der ersten Koronaentladungseinrichtung 11. Durch die Einspeisung eines Gases aus dem Gasbehälter 18 in die zweite Koronaentladungseinrichtung 15 kann eine abgestimmte Modifizierung bzw. Aktivierung der zu behandelnden Folienbahn in der Koronaentladungszone der ersten Koronaentladungseinrichtung 11 vorgenommen werden. Als Reaktivierungsgas können beispielsweise Stickstoff oder sonstige stickstoffhaltige gasförmige Verbindungen Anwendung finden.

Der Gasbehälter 18 ist über eine Leitung 17 mit dem Gehäuse 16 der zweiten Koronaentladungseinrichtung 15 verbunden. Üblicherweise wird der Druck des aus dem Gasbehälter 18 ausströmenden Gases durch ein nicht näher dargestelltes Druckreduzierventil geregelt. In Figur 2 ist gezeigt, daß die Entladungselektroden 4 und 14 der beiden Koronaentladungseinrichtungen 11 und 15 gemeinsam von den einzigen Generator 5 mit Spannung beaufschlagt werden, jedoch ist auch eine Anordnung möglich, bei der die Elektroden jeder Koronaentladungseinrichtung von einem eigenen Generator mit Hochspannung beaufschlagt werden.

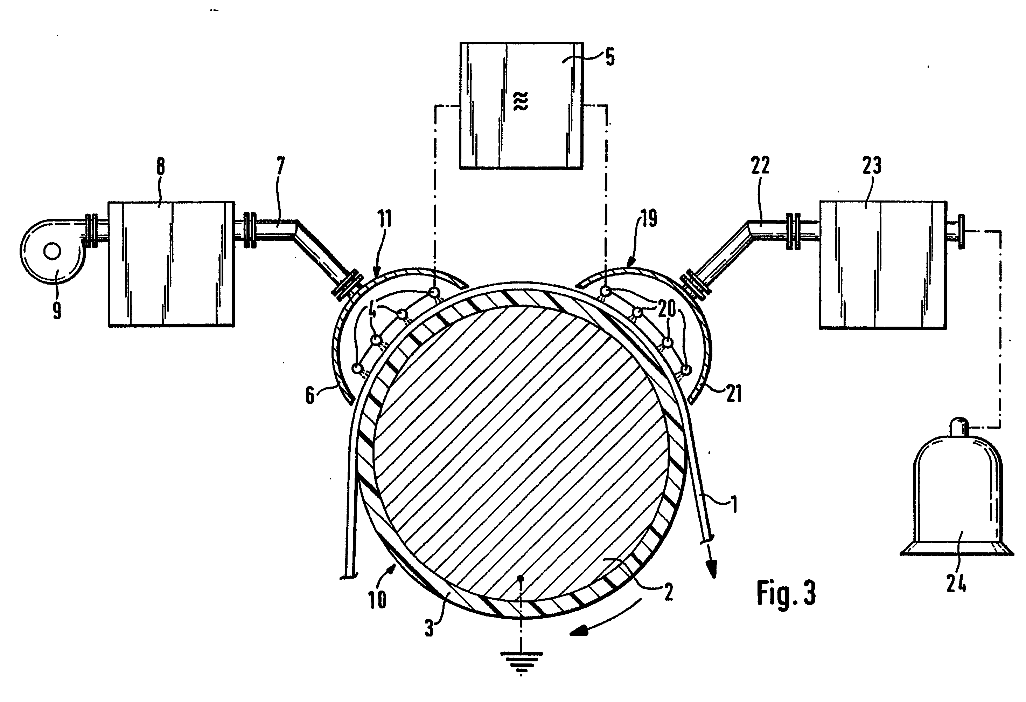

Figur 3 zeigt eine Ausführungsform der Erfindung, bei der zwei Anordnungen entsprechend der in Figur 1 dargestellten Anordnung entlang dem Umfang der Walze 10 angeordnet sind. Die erste Koronaentladungseinrichtung 11 mit der angeschlossenen Zerstäubereinrichtung 8 und dem Gebläse 9 entspricht weitgehend der Anordnung, wie sie anhand von Figur 1 beschrieben wurde. In Transportrichtung der Folienbahn 1 ist nach der ersten Koronaentladungseinrichtung 11 eine dritte Koronaentladungseinrichtung 19 mit Elektroden 20 vorgesehen, deren Gehäuse 21 die Elektroden 20 umschließt. Das Gehäuse 20 ist über einen Rohrstutzen und eine Leitung 22 mit einem Rohrstutzen einer Zerstäubereinrichtung 23 verbunden, an die ein Gasbehälter 24 angeschlossen ist. In dem Gasbehälter 24 ist ein Trägergas für das Aerosol gespeichert, das in der Zerstäubereinrichtung 23 aus der Behandlungsflüssigkeit erzeugt wird. Als Trägergas kommen, neben Luft und Stickstoff, noch verschiedene Edelgase in Betracht.

Die Elektroden 4 und 20 der ersten und dritten Koronaentladungseinrichtung 11 bzw. 19 sind an den gemeinsamen Generator 5 angeschlossen. Jedoch ist es auch bei dieser Anordnung möglich, daß jede der Koronaentladungseinrichtungen über einen getrennten Generator mit Spannung versorgt wird.

Über das Gebläse 9 kann entweder Luft oder ein Gas in die Zerstäubereinrichtung 8 eingeblasen werden, das dann als Trägergas für das jeweilige Aerosol dient, welches in die Koronaentladungseinrichtung 11 eingespeist wird. Mit der gezeigten Anordnung können zwei unterschiedliche Flüssigkeiten bzw. deren Aerosole verwendet werden und darüber hinaus auch noch unterschiedliche Trägergase für das jeweilige Aerosol. Diese Anordnung läßt durch die Kombination von flüssigen und gasförmigen Reaktionsteilnehmern vielseitige Oberflächenmodifikationen der Folienbahn 1 zu. Je nach Art der verwendeten Substanzen lassen sich auf die Folienbahnoberfläche auch polymerisierbare bzw. vernetzende Schichten durch die Aerosole aufbringen. Die Folienbahn 1 kann aus Polypropylen, Polyester, ebenso auch aus Polyvinylchlorid bestehen. Mögliche Transportgeschwindigkeiten für die Folienbahn 1 liegen im Bereich von 20 bis 200 m/min.

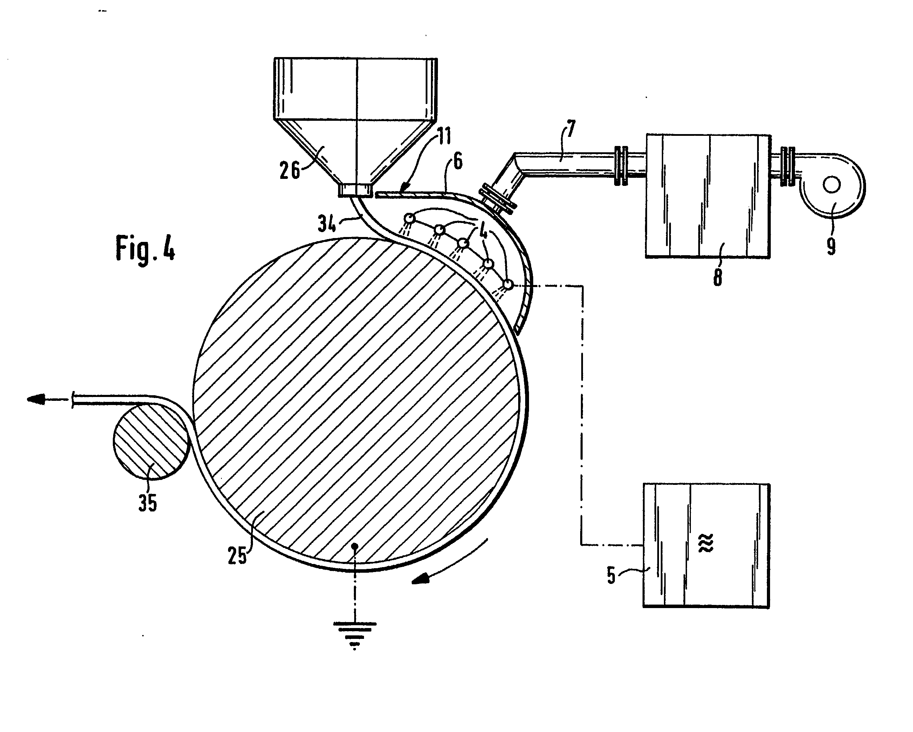

Mit der in Figur 4 dargestellten Anordnung ist eine Modifizierung extrudierter Kunststoffschmelzen möglich. Ein Schmelzefilm 34 aus Kunststoff wird aus einer Breitschlitzdüse 26, die nahe dem Umfang einer Kühlwalze 25 angeordnet ist, auf die Umfangsfläche der Kühlwalze 25 extrudiert. Das Gehäuse 6 der ersten Koronaentladungseinrichtung 11 ist so angeordnet, daß es unmittelbar an die Breitschlitzdüse 26 anschließt. Im übrigen schirmt das Gehäuse 6 die Elektroden 4 der Koronaentladungseinrichtung 11 ab. Das Gehäuse 6 ist über die Leitung 7 mit der Zerstäubereinrichtung 8 verbunden, an die das Gebläse 9 angeschlossen ist. Der Generator 5 beaufschlagt die Elektroden 4 mit dem erforderlichen hochfrequenten Wechselstrom hoher Spannung. Als Gegenelektrode zu den Elektroden 4 dient die geerdete Kühlwalze 25. Der Schmelzefilm 34 wird über eine Umlenkrolle 35 von der Kühlwalze 25 abgezogen.

Bei der Oberflächenmodifikation von Schmelzefilm war bisher der Einsatz von Flüssigkeiten nicht möglich, da die von konventionellen Sprühsystemen gelieferten großen Flüssigkeitstropfen eine nichttolerierbare Deformation und damit qualitätsmindernde Schädigung des duktilen Schmelzefilms bewirkten. Die von der Zertäubereinrichtung 8 gelieferten, schwebfähigen Aerosole mit Tröpfchengrößen im Bereich von kleiner als 3 mm schließen diese Gefahr von vornherein aus. Neben der Oberflächenmodifizierung des Schmelzefilms kann mit der in Figur 4 gezeigten Anordnung auch die Morphologie des extrudierten Schmelzefilms beeinflußt werden. Die zusätzliche Beaufschlagung der Luftseite des Schmelzefilms 34 mit einem Aerosol begünstigt die Abkühlung des Schmelzefilms und steuert darüber hinaus die Kristillinität, die Oberflächenrauhigkeit, die Trübung und dergleichen Größen mehr des Schmelzefilms. Gegenüber den Ausführungsformen, wie sie in den Figuren 1 bis 3 dargestellt sind, unterscheidet sich die Ausführungsform nach Figur 4 nur durch die für das Extrudieren des Schmelzefilms 34 benötigten Einrichtungen, nämlich die temperierbare metallische Kühlwalze 25 und durch die Breitschlitzdüse 26 zur Ausformung des Schmelzefilms.

Figur 5a zeigt eine Ausführungsform der Erfindung, die für die Innenbehandlung von Formkörpern aus Kunststoffen geeignet ist. Anwendungsgebiete für die Oberflächenbehandlung von Kanistern, Behältern, Tanks und sonstigen Vorratsgefäßen für Chemikalien ist die Veredlung der Kunststoff-Innenoberflächen dieser Behälter, um die Durchlässigkeit dieser Kunststoffbehälter gegenüber verschiedenen Flüssigkeiten zu reduzieren. Von besonderem Nachteil ist die zu große Permeabilität für Kohlenwasserstoffe beim Einsatz von Polyethylen für derartige Behälter. Durch geeignete Behandlungsmethoden kann die Durchlässigkeit beispielsweise für einige aliphatische und aromatische Kohlenwasserstoffe, z.B. Benzin, auf weniger als 2 % verringert werden. Hierzu ist es bekannt, insbesondere in Lösungsmitteln oder Lösungsmittelgemischen gelöstes elementares Fluor zu verwenden, das mit Polyethylen an der Oberfläche, unter Ausbildung einer dünnen fluorierten Schicht, reagiert, die Kohlenfluor- und Kohlenwasserstofffluor-Gruppen enthält. Dieses Verfahren wird auch als Lösungsfluorierung bezeichnet, bei der auch die Zugabe von Trägergasen, wie beispielsweise Sauerstoff, Schwefeldioxid und Kohlendioxid, möglich ist. Durch die Fluorierung wird die Durchlässigkeit für verschiedene Lösungsmittel verringert und auch die Kunststoffoberfläche so modifiziert, daß sie lackier- und beklebbar wird.

Eine Koronaentladungseinrichtung 29 der Anordnung besteht aus einem metallischen Trägerrohr 27, das an seiner Außenseite Elektroden 30 in Gestalt eines Bürstenbesatzes aufweist. Die Gegenelektrode zu den Elektroden 30 bildet ein Formteil 28b, das zusammen mit einem weiteren Formteil 28a aus Metall den zu behandelnden Formkörper 31 aus Kunststoff umspannt. Das hohle Trägerrohr 27 ist an einen Rohrstutzen der Zerstäubereinrichtung 8 angeschlossen, die mit dem Gebläse 9 in Verbindung steht. Der Generator 5 beaufschlagt das Trägerrohr 27 und somit die Elektroden mit dem erforderlichen hochfrequenten Wechselstrom für die Koronaentladung. Der Formteil 28b als Gegenelektrode zu den Elektroden 30 ist geerdet. In der Zerstäubereinrichtung 8 wird beispielsweise in einem Lösungsmittel gelöstes elementares Fluor zu einem Aerosol zerstäubt, wobei das Gebläse 9 das Trägergas, beispielsweise Luft, für das Aerosol in die Zerstäubereinrichtung einbläst, aus der dann das Aerosol in das hohle Trägerrohr 27 einströmt, das ein offenes Ende aufweist, durch welches das Aerosol in das Innere des Formkörpers 31 einströmt. Der Formkörper umgibt das Trägerrohr 27 im Bereich der Elektroden 30, die in ihrer geometrischen Ausgestaltung an die Innenkonturen des Formkörpers 31 angepaßt sind.

Der Formkörper 31 ist in den beiden Formteilen 28a und 28b aus Metall eingespannt, wobei der Innenraum der Formteile an die Außenkonturen des Formkörpers 31 angepaßt ist.

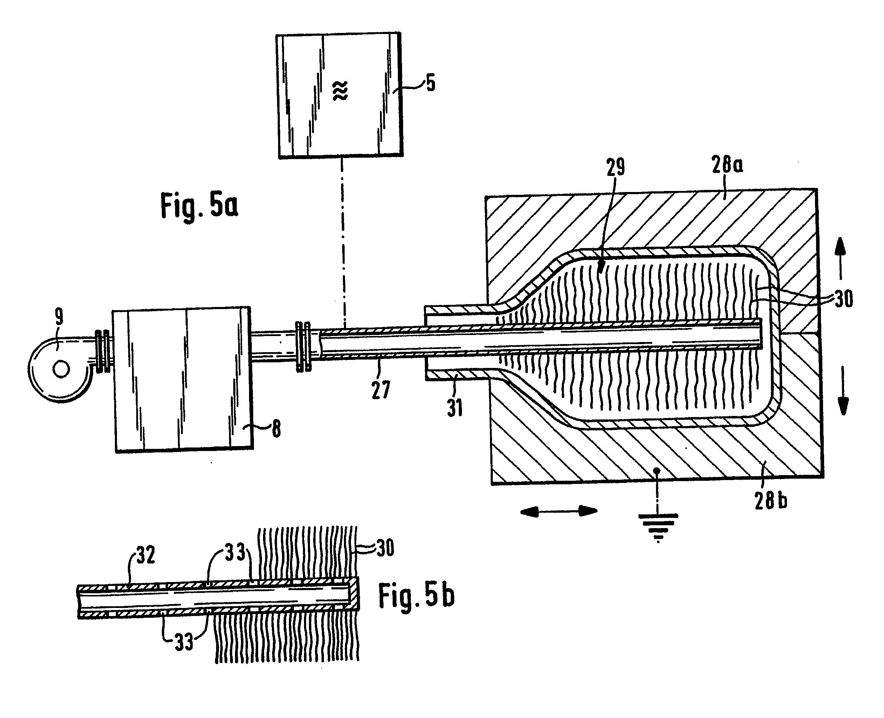

In Figur 5b ist eine weitere Ausgestaltung eines Trägerrohres 32 dargestellt, das anstelle des Trägerrohres 27 in Figur 5a zum Einsatz gelangen kann. Dieses Trägerrohr 32 enthält in seiner Rohrwand Löcher 33, während sein in dem Formkörper 31 befindliches Ende abgeschlossen ist. Das von der Zerstäubereinrichtung 8 in das Trägerrohr 32 einströmende Aerosol strömt durch diese Löcher 32 in das Innere des Formkörpers 31, der das Trägerrohr 32 im Bereich der Elektroden 30 umschließt, die, wie zuvor schon erwähnt wurde, in ihren geometrischen Abmessungen an die Innenkonturen des Formkörpers 31 angepaßt sind. Die Elektroden 30 auf den Trägerrohren 27 bzw. 32 bestehen aus elastischen, elektrisch leitfähigen Materialien, wie Metalldrähten oder Kohlenstoffasern.

Das erfindungsgemäße Verfahren zur Modifizierung von Kunststoffoberflächen mit Hilfe von Koronaentladungen erweitert durch die Einbeziehung von Flüssigkeiten, speziell in Form von Aerosolen, in die Koronaentladungsprozesse die Möglichkeiten der chemischen Veränderung von Oberflächen von Kunststoffmaterialien erheblich. Je nach Art der verwendeten Flüssigkeiten für die Aerosole und der Transportgase für die jeweiligen Aerosole können auch die nachfolgenden Veredlungsschritte, wie Beschichten, Drucken, Laminieren, Lackieren, Metallisieren, abgestimmte Oberflächenmodifizierungen, eingestellt, bzw. chemisch aktive Schichten auf die behandelten Kunststoffoberflächen appliziert werden.

Nachstehend ist noch eine Auswahl von Substanzen, die als Aerosole in die Koronaentladungseinrichtungen eingebracht werden können, tabellarisch zusammengestellt. In Tabelle 1 ist zu den einzelnen Substanzen jeweils ihre Verwendbarkeit bzw. die Art der Oberflächemodifizierung des Kunststoffes, die erzielt werden kann, angeführt. Diese Auswahl erhebt keinen Anspruch auf Vollständigkeit und beschränkt die Erfindung nicht, da grundsätzlich alle Substanzen, die Aerosole bilden und die Kunststoffoberflächen in gewünschter Weise modifizieren können, anwendbar sind.

In einer weiteren Tabelle 2 sind für bestimmte Transportgeschwindigkeiten von Folienbahnen, deren Oberflächen modifiziert wurden, die Bahngeschwindigkeiten, die verwendeten Aerosole und die nach der Vorbehandlung der Folienbahnen gemessenen mittleren Oberflächenwiderstände zusammengestellt.

Die Vergleichsbeispiele 1 und 2 in Tabelle 2 zeigen, daß bei Weglassen der Koronaentladung und alleinigem Aufsprühen des Antistatikums der mittlere Oberflächenwiderstand von $1 \times 10^{13}$ Ohm.m in der Größenordnung des Oberflächenwiderstands einer unbehandelten Folienoberfläche liegt bzw. daß bei einer Behandlung der Oberfläche in zwei Schritten, nämlich durch eine reine Koronaentladung und das anschließende Aufsprühen des Antistatikums der mittlere Oberflächenwiderstand von $3 \times 10^9$ Ohm.m um eine Zehner-Potenz höher als bei der erfindungsgemäßen Vorbehandlung liegt.

TABELLE 1

| Substanzen für Aerosole | Eigenschaften der Kunststoffober- flächen nach der Modifizierung |
|---|---|
| Polyurethan<br>Polyvinylalkohol<br>Copolyester<br>Acrylat | Haftvermittlung |
| Acrylat | Schlupf/Haftvermittlung |
| Polyvinyliden-<br>chlorid | Barriereverhalten/<br>Haftvermittlung |
| Fluorpolymer<br>Fluoracrylat<br>Perfluoropolyether<br>Polyethersiloxane | Schlupf/Antihaftung |
| Acrylat | Schlupf |
| Quaternäres Ammonium-<br>salz<br>Cholinesterchlorid<br>Alkylsulfonat<br>Alkylsulfat<br>Dialkyldimethyl-<br>ammoniumchloridpolymer | Antistatikum |

7

TABELLE 2

| Transportge-schwindigkeit der Folienbahn (m/min) | Korona-entladungs-spannung (Volt) | Substanz | Mittlerer Oberflächen-widerstand (Ohm·m) |
|---|---|---|---|
| 20 | 5000 | | $8,5 \times 10^7$ |
| 40 | 5000 | | $4 \times 10^8$ |
| 60 | 5000 | | $7 \times 10^9$ |
| 20 | 10000 | Quaternäres Ammoniumsalz | $4 \times 10^7$ bis $6 \times 10^7$ |
| 40 | 10000 | als Anti- | $1 \times 10^8$ |
| 60 | 10000 | statikum | $3 \times 10^8$ |
| 20 | 15000 | (Produktname | $5 \times 10^7$ |
| 40 | 15000 | LEOMIN FA) | $1 \times 10^8$ |
| 60 | 15000 | | $3 \times 10^8$ |
| 60 | 20000 | | $2 \times 10^8$ bis $9 \times 10^9$ |
| 20 (Vergleichs-beispiel 1) | Koronaent-ladung | Quaternäres Ammoniumsalz aufgesprüht | $1 \times 10^{13}$ |
| 20 (Vergleichs-beispiel 2) | 10000 1.Schritt | - | |
| - | 2.Schritt | Quaternäres Ammoniumsalz aufgesprüht | $3 \times 10^9$ |

**Patentansprüche**

1. Verfahren zur Oberflächenvorbehandlung von Kunststoff mittels einer elektrischen Koronaentladung, die zwischen spannungsführenden Elektroden und einer geerdeten Gegenelektrode abläuft, zwischen denen der Kunststoff sich befindet, dadurch gekennzeichnet, daß in die Koronaentladungszone mittels eines Luft- oder Gasstromes ein Aerosol, gebildet durch die Zerstäubung einer Flüssigkeit, eingebracht wird.

2. Verfahren nach Anspruch 1, dadurch gekennzeichnet, daß der zu behandelnde Kunststoff in einem ersten Schritt durch eine konventionelle Koronaentladung oberflächenaktiviert und in einem zweiten Schritt einer Koronaentladung in einer Aerosol-Atmosphäre ausgesetzt wird.

3. Verfahren nach Anspruch 1, dadurch gekennzeichnet, daß der zu behandelnde Kunststoff mindestens zwei Koronaentladungen in Folge ausgesetzt wird, wobei jede der Koronaentladungen in jeweils unterschiedlicher Aerosol-Atmosphäre vorgenommen wird.

4. Verfahren nach den Ansprüchen 1 bis 3, dadurch gekennzeichnet, daß das Aerosol durch Trägergase, wie Luft, Gase oder Gasgemische, in die Koronaentladungszone transportiert wird.

5. Verfahren nach den Ansprüchen 1 bis 4, dadurch gekennzeichnet, daß in die Koronaentladungszone Aerosole von Monomeren, Dispersionen, Lösungen von nieder- und/oder hochmolekularen Polymerkomponenten und kolloidalen Systemen in wäßriger Form oder in Lösungsmitteln gelöst, eingebracht werden.

6. Verfahren nach den Ansprüchen 1 bis 5, dadurch gekennzeichnet, daß die Oberflächen zweier Kunststoffe, unabhängig voneinander, in zwei unterschiedlichen Aerosol-Atmosphären behandelt und anschließend die Oberflächen miteinander in Kontakt gebracht werden.

7. Verfahren nach den Ansprüchen 1 bis 6, dadurch gekennzeichnet, daß ein extrudierter Schmelzefilm aus Kunststoff mittels einer Wechselspannungskoronaentladung an eine Auflage luftfrei angelegt wird, bei gleichzeitigem Einbringen eines durch Ultraschallzerstäuben einer Flüssigkeit erzeugten Aerosols in die Koronaentladungszone.

8. Verfahren nach den Ansprüchen 1 bis 7, dadurch gekennzeichnet, daß der zu behandelnde Kunststoff, die zum Aerosol zu zerstäubende Flüssigkeit und das dem Aerosoltransport dienende Trägergas auf eine Temperatur zwischen 20 ° und 95 °C erwärmt werden.

9. Verfahren nach Anspruch 8, dadurch gekennzeichnet, daß der Kunststoff eine Folienbahn ist, die auf der Außenseite mit einem Aerosol beaufschlagt wird.

10. Verfahren nach Anspruch 9, dadurch gekennzeichnet, daß der Oberflächenwiderstand der mit dem Aerosol beaufschlagten Außenseite der Folienbahn zwischen $10^8$ und $10^9$ Ohm•m beträgt.

11. Anordnung zur Oberflächenvorbehandlung von Kunststoff mittels einer elektrostatischen Koronaentladung, mit von einem Generator mit einem hochfrequenten Wechselstrom hoher Spannung beaufschlagten Elektroden, die im Abstand zu einer geerdeten Gegenelektrode angeordnet sind, dadurch gekennzeichnet, daß die Elektroden (4) einer ersten Koronaentladungseinrichtung (11) gegenüber der Umgebung durch ein Gehäuse (6) abgeschirmt sind, das über eine Leitung (7) mit einer Zerstäubereinrichtung (8) zum Zerstäuben von Flüssigkeit zu einem schwebfähigen Aerosol verbunden ist, und daß ein in der Durchsatzmenge regulierbares Gebläse (9) an die Zerstäubereinrichtung (8) angeschlossen ist und das Trägergas für das Aerosol durch die Zerstäubereinrichtung (8) hindurch in die Koronaentladungseinrichtung (11) fördert.

12. Anordnung nach Anspruch 11, dadurch gekennzeichnet, daß die Zerstäubereinrichtung (8) aus einem piezoelektrisch arbeitenden Ultraschallschwingsystem besteht.

13. Anordnung nach Anspruch 11, dadurch gekennzeichnet, daß die Zerstäubereinrichtung (8) mit Ultraschallgeschwindigkeit arbeitende Zweistoff-Zerstäuberdüsen aufweist.

14. Anordnung nach Anspruch 11, dadurch gekennzeichnet, daß der Generator (5) mit einer Wechselspannung von 5000 V bis 25000 V die Elektroden (4) und die Gegenelektrode (2) beaufschlagt.

15. Anordnung nach Anspruch 14, dadurch gekennzeichnet, daß die zwischen den Elektroden (4) und der Gegenelektrode (2) anliegende Wechselspannung, die der regelbare Generator (5) erzeugt, proportional zu der Transportgeschwindigkeit des Kunststoffs durch die erste Koronaentladungseinrichtung (11) gewählt ist.

16. Anordnung nach Anspruch 11, dadurch gekennzeichnet, daß die Leitung (7) eine Rohrleitung ist, die an einen Rohrstutzen (12) des Gehäuses (6) und an einen Rohrstutzen (13) der Zerstäubereinrichtung (8) angeflanscht ist.

17. Anordnung nach Anspruch 11, dadurch gekennzeichnet, daß die Leitung (7) eine Schlauch- oder sonstige flexible Leitung ist.

18. Anordnung nach Anspruch 11, dadurch gekennzeichnet, daß in Transportrichtung des Kunststoffs (1) vor der ersten Koronaentladungseinrichtung (11) eine zweite Koronaentladungseinrichtung (15) mit Elektroden (14), abgeschirmt durch ein Gehäuse (16), angeordnet ist und daß das Gehäuse (16) über eine Leitung (17) mit einem Gasbehälter (18) verbunden ist.

19. Anordnung nach Anspruch 18, dadurch gekennzeichnet, daß die Elektroden (4, 14) der ersten und zweiten Koronaentladungseinrichtung (11, 15) an den gemeinsamen Generator (5) angeschlossen sind.

20. Anordnung nach Anspruch 11, dadurch gekennzeichnet, daß in Transportrichtung des Kunststoffs (1) nach der ersten Koronaentladungseinrichtung (11) eine dritte Koronaentladungseinrichtung (19) mit Elektroden (20) angeordnet ist, deren Gehäuse (21) die Elektroden (20) umschließt und über eine Leitung (22) mit einer Zerstäubereinrichtung (23) verbunden ist, in die ein Trägergas für ein Aerosol von einem angeschlossenen Gasbehälter (24) aus eingespeist wird.

21. Anordnung nach Anspruch 20, dadurch gekennzeichnet, daß die Elektroden (4, 20) der ersten und dritten Koronaentladungseinrichtung an den gemeinsamen Generator (5) angeschlossen sind.

EP 0 279 371 B1

22. Anordnung nach Anspruch 11, dadurch gekennzeichnet, daß eine Breitschlitzdüse (26) vorhanden ist, aus der ein Schmelzefilm aus Kunststoff (1) auf eine Kühlwalze (25) als Gegenelektrode zu den Elektroden (4) der ersten Koronaentladungseinrichtung (11) extrudiert wird und daß das Gehäuse (6) zum Abschirmen der Elektroden (4) so angeordnet ist, daß es unmittelbar an die Breitschlitzdüse (26) anschließt.

23. Anordnung zur Oberflächenvorbehandlung von Kunststoff mittels einer elektrischen Koronaentladungseinrichtung, mit von einem Generator mit einem hochfrequenten Wechselstrom hoher Spannung beaufschlagten Elektroden, die im Abstand zu einer geerdeten Gegenelektrode angeordnet sind, dadurch gekennzeichnet, daß ein metallisches Trägerrohr (27 bzw. 32) an seiner Außenseite Elektroden (30) in Gestalt eines Bürstenbesatzes aufweist, und in das Innere eines Formkörpers (31) aus dem Kunststoff eingeschoben ist, daß das Trägerrohr (27 bzw. 32) an den Generator (5) angeschlossen und mit einer Zerstäubereinrichtung (8) zum Zerstäuben einer Flüssigkeit zu einem Aerosol verbunden ist und daß ein regelbares Gebläse (9) das Trägergas für das Aerosol in die Zerstäubereinrichtung (8) fördert.

24. Anordnung nach Anspruch 23, dadurch gekennzeichnet, daß das Trägerrohr (27) ein offenes Ende aufweist, durch das Aerosol in das Innere des aus Kunststoff bestehenden Formkörpers (31) strömt, der das Trägerrohr im Bereich der Elektroden (30) umschließt.

25. Anordnung nach Anspruch 23, dadurch gekennzeichnet, daß das Trägerrohr (32) in der Rohrwand Löcher (33) enthält und ein abgeschlossenes Ende aufweist, und daß durch die Löcher (32) Aerosol in das Innere des aus Kunststoff bestehenden Formkörpers (31) strömt, der das Trägerrohr (32) im Bereich der Elektroden (30) umschließt.

26. Anordnung nach Anspruch 23, dadurch gekennzeichnet, daß die Elektroden (30) des Trägerrohrs (27 bzw. 32) in ihrer geometrischen Ausgestaltung an die Innenkonturen des Formkörpers (31) angepaßt sind.

27. Anordnung nach Anspruch 23, dadurch gekennzeichnet, daß die Elektroden (30) aus elastischen, elektrisch leitfähigen Materialien, wie Metalldrähten oder Kohlenstoffasern, bestehen.

28. Anordnung nach Anspruch 23, dadurch gekennzeichnet, daß der Formkörper (31) in zwei Formteile (28a, 28b) aus Metall eingespannt ist, von denen ein Formteil (28b) als Gegenelektrode zu den Elektroden (30) geerdet ist und daß der Innenraum der Formteile (28a, 28b) an die Außenkonturen des Formkörpers (31) angepaßt ist.

## Claims

1. A process for surface pre-treatment of plastic by means of an electrical corona discharge which takes place between voltage-conducting electrodes and an earthed counter-electrode, between which the plastic is located, characterized in that an aerosol formed by atomizing of a liquid is introduced into the corona-discharge zone by means of a stream of air or gas.

2. The process as claimed in claim 1, characterized in that in a first step the plastic to be treated is surface-activated by a conventional corona discharge and that in a second step it is subjected to a corona discharge in an aerosol atmosphere.

3. The process as claimed in claim 1, characterized in that the plastic to be treated is subjected to at least two corona discharges in sequence, each of the corona discharges being carried out in a different aerosol atmosphere.

4. The process as claimed in claims 1 to 3, characterized in that the aerosol is transported into the coronadischarge zone by carrier gases, such as air, gases or gas mixtures.

5. The process as claimed in claims 1 to 4, characterized in that aerosols of monomers, dispersions or solutions of low- and/or high-molecular-weight polymer components and colloidal systems in aqueous form or dissolved in solvents are introduced into the corona-discharge zone.

6. The process as claimed in claims 1 to 5, characterized in that the surfaces of two plastics are treated, independently of one another, in two different aerosol atmospheres, and the surfaces are subsequently brought into contact with one another.

7. The process as claimed in claims 1 to 6, characterized in that an extruded plastic melt film is applied in air-free form to a base by means of an alternating current corona discharge while simultaneously introducing an aerosol, produced by ultrasound atomization of a liquid, into the corona-discharge zone.

8. The process as claimed in claims 1 to 7, characterized in that the plastic to be treated, the liquid to be atomized to form an aerosol and the carrier gas used for aerosol transport are heated to a temperature of between 20 °C and 95 °C.

9. The process as claimed in claim 8, characterized in that the plastic is a film web to the outer surface of which an aerosol is applied.

10. The process as claimed in claim 9, characterized in that the surface resistance of the outer surface of the film sheet to which the aerosol has been applied is between 108 and 109 ohm·m.

11. A device for surface pretreatment of plastic by means of an electrostatic corona discharge, comprising electrodes to which a high-frequency, high-voltage alternating corrent is applied by a generator and which are arranged at a distance from an earthed counterelectrode, characterized in that the electrodes (4) of a first corona-discharge device (11) are screened from the environment by a housing (6), which is connected via a line (7) to an atomizer (8) for atomizing liquid to form an aerosol which is capable of remaining suspended, and that a fan (9), the throughput rate of which can be regulated, is connected to the atomizer (8) and blows the carrier gas for the aerosol through the atomizer (8) into the corona-discharge device (11).

12. A device as claimed in claim 11, characterized in that the atomizer (8) comprises a piezoelectrically operating ultrasound vibration system.

13. A device as claimed in claim 11, characterized in that the atomizer (8) incorporates two-component atomizer nozzles which operate at ultrasound speed.

14. A device as claimed in claim 11, characterized in that the generator (5) applies an alternating voltage of 5, 000 V to 25, 000 V to the electrodes (4) and the counterelectrode (2).

15. A device as claimed in claim 14, characterized in that the alternating voltage which is applied between the electrodes (4) and the counterelectrode (2) and which is produced by the adjustable generator (5) is selected to be proportional to the transport rate of the plastic through the first corona-discharge device (11).

16. A device as claimed in claim 11, characterized in that the line (7) is a pipe which is connected to a pipe connector (12) of the housing (6) and to a pipe connector (13) of the atomizer (8).

17. A device as claimed in claim 11, characterized in that the line (7) is a tube or another flexible line.

18. A device as claimed in claim 11, characterized in that a second corona-discharge device (15) having electrodes (14), screened by a housing (16), is arranged ahead of the first corona-discharge device (11), seen in the transport direction of the plastic (1), and that the housing (16) is connected to a gas container (18) via a line (17).

19. A device as claimed in claim 18, characterized in that the electrodes (4, 14) of the first and second corona-discharge devices (11, 15) are connected to the common generator (5).

20. A device as claimed in claim 11, characterized in that a third corona-discharge device (19) is arranged after the first corona-discharge device (11), seen in the transport direction of the plastic (1), said third coronadischarge device comprising electrodes (20) which are enclosed by the housing (21), and said housing being connected via a line (22) to an atomizer (23), into which a carrier gas for an aerosol is fed from a connected gas container (24).

21. A device as claimed in claim 20, characterized in that the electrodes (4, 20) of the first and third corona-discharge devices are connected to the common generator (5).

22. A device as claimed in claim 11, characterized in that a slot die (26) is present, from which a plastic melt film (1) is extruded onto a chill roller (25) serving as conterelectrode to the electrodes (4) of the first corona-discharge device (11), and that the housing (6) for screening the electrodes (4) is arranged so that it is directly adjacent to the slot die (26).

23. A device for surface pre-treatment of plastic by means of an electrical corona-discharge device, comprising electrodes to which a high-frequency, high-voltage alternating current is applied by a generator and which are arranged at a distance from an earthed counterelectrode, characterized in that a metallic support pipe (27 or 32) carries, on its outer surface, electrodes (30) in the shape of a brush head and is inserted into the interior of a moulded article (31) made from the plastic, that the support pipe (27 or 32) is connected to the generator (5) and to an atomizer (8) for atomizing a liquid to form an aerosol, and that an adjustable fan (9) blows the carrier gas for the aerosol into the atomizer (8).

24. A device as claimed in claim 23, characterized in that the support pipe (27) has an open end through which the aerosol flows into the interior of the plastic molded article (31) which encompasses the support pipe in the region of the electrodes (30).

25. A device as claimed in claim 23, characterized in that the support pipe (32) is provided with holes (33) in its pipe wall and has a sealed end, and in that the aerosol flows through the holes (32) into the interior of the plastic molded article (31) which encompasses the support pipe (32) in the region of the electrodes (30).

26. A device as claimed in claim 23, characterized in that the geometrical shape of the electrodes (30) of the support pipe (27 or 32) is matched to the internal contours of the molded article (31).

27. A device as claimed in claim 23, characterized in that the electrodes (30) comprise elastic, electroconductive materials, such as metal wires or carbon fibers.

28. A device as claimed in claim 23, characterized in that the molded article (31) is held in two metal mold parts (28a and 28b) of which one mold part (28b) is earthed as the counterelectrode to the electrodes (30), and that the interior of the mold parts (28a and 28b) is matched to the outer contours of the molded article (31).

**Revendications**

1. Procédé pour le prétraitement de surface d'une matière plastique à l'aide d'une décharge électrique à effet couronne, qui se produit entre des électrodes placées sous tension et une contre-électrode raccordée à la terre, la matière plastique étant disposée entre ces électrodes, caractérisé en ce qu'on introduit un aérosol, formé par l'atomisation d'un liquide, dans la zone de décharge à effet couronne, au moyen d'un courant d'air ou de gaz.

2. Procédé selon la revendication 1, caractérisé en ce que, lors d'une première étape, on soumet la matière plastique devant être traitée à une activation de surface au moyen d'une décharge classique à effet couronne et que, lors d'une seconde étape, on la soumet à une décharge à effet couronne dans une atmosphère d'aérosol.

3. Procédé selon la revendication 1, caractérisé en ce qu'on soumet successivement la matière plastique devant être traitée à au moins deux décharges à effet couronne, qui sont mises en œuvre chacune dans une atmosphère d'aérosol respectivement différente.

4. Procédé selon les revendications 1 à 3, caractérisé en ce que l'aérosol est entraîné par des gaz porteurs tels que l'air, des gaz ou des mélanges gazeux, dans la zone de décharge à effet couronne.

5. Procédé selon les revendications 1 à 4, caractérisé en ce qu'on introduit, dans la zone de décharge à effet couronne, des aérosols de monomères, de dispersions, de solutions formées à partir de composants polymériques de bas poids moléculaire et/ou de haut poids moléculaire, et de système colloïdaux à l'état aqueux ou dissous dans des solvants.

6. Procédé selon les revendications 1 à 5, caractérisé en ce qu'on traite les surfaces de deux matières plastiques, indépendamment l'une de l'autre, dans deux atmosphères différentes d'aérosols et qu'on place ensuite les surfaces en contact réciproque. 7. Procédé selon les revendications 1 à 6, caractérisé en ce qu'on applique une pellicule fondue extrudée d'une matière plastique, en l'absence d'air, sur un support, au moyen d'une décharge à effet couronne à tension alternative, tout en introduisant simultanément, dans la zone de décharge à effet couronne, un aérosol produit par l'atomisation d'un liquide à l'aide des ultrasons.

8. Procédé selon les revendications 1 à 7, caractérisé en ce qu'on chauffe à une température comprise entre 20° et 95°C la matière plastique devant être traitée, le liquide devant être atomisé pour former l'aérosol et le gaz porteur utilisé pour entraîner l'aérosol.

9. Procédé selon la revendication 8, caractérisé en ce que la matière plastique est une feuille en forme de bande, sur la face extérieure de laquelle on applique un aérosol.

10. Procédé selon la revendication 9, caractérisé en ce que la résistance superficielle de la face extérieure, sur laquelle est appliqué l'aérosol, de la feuille en forme de bande est comprise entre 108 et 109 ohms.m.

11. Dispositif pour réaliser le prétraitement de surface d'une matière plastique à l'aide d'une décharge électrostatique à effet couronne, comportant des électrodes alimentées par un générateur fournissant un courant alternativ à haute fréquence et à haute tension, les electrodes etant disposées à une certaine distance d'une contre-électrode raccordée à la terre, caractérisé en ce que les électrodes (4) d'un premier dispositif de décharge à effet couronne (11) sont protégées vis-à-vis de l'environnement par un boîtier (6), qui est relié par l'intermédiaire d'une canalisation (7) à un atomiseur (8) servant à atomiser le liquide pour former un aérosol pouvant être mis en suspension, et qu'un ventilateur (9), dont le débit peut être réglé, est raccordé à l'atomiseur (8) et que le gaz porteur servant à entraîner l'aérosol est envoyé au dispositif de décharge à effet couronne (11) en traversant l'atomiseur (8). 12. Dispositif selon la revendication 11, caractérisé en ce que l'atomiseur (8) est constitué par un système oscillant à ultrasons à fonctionnement piézoélectrique.

13. Dispositif selon la revendication 11, caractérisé en ce que l'atomiseur (8) possède des buses d'atomisation délivrant deux composants et travaillant à la vitesse des ultrasons.

14. Dispositif selon la revendication 11, caractérisé en ce que le générateur (5) applique une tension alternative comprise entre 5000 V et 25 000 Vaux électrodes (4) et à la contre-électrode (2).

15. Dispositif selon la revendication 14, caractérisé en ce que la tension alternative, qui est appliquée entre les électrodes (4) et la contre-électrode (2) et que produit le générateur réglable (5), est choisie proportionnellement à la vitesse de transport de la matière plastique dans le premier dispositif de décharge à effet couronne (11).

16. Dispositif selon la revendication 11, caractérisé en ce que la canalisation (7) est une conduite tubulaire, qui est raccordée par bride à un embout tubulaire (12) du boîtier (6) et à un embout tubulaire (13) de l'atomiseur (8).

17. Dispositif selon la revendication 11, caractérisé en ce que la canalisation (7) est un tuyau ou une autre canalisation flexible.

18. Dispositif selon la revendication 11, caractérisé en ce qu'un second dispositif de décharge à effet couronne (15) comportant des électrodes (14) et protégé par un boîtier (16) est installé dans la direction de transport de la matière plastique (1) en amont du premier dispositif de décharge à effet couronne (11) et que le boîtier (16) est relié par l'intermédiaire d'une canalisation (17) à un réservoir de gaz (18). 19. Dispositif selon la revendication 18, caractérisé en ce que les électrodes (4, 14) du premier et du deuxième dispositif de décharge (11, 15) sont raccordées au générateur commun (5).

20. Dispositif selon la revendication 11, caractérisé en ce qu'en aval du premier dispositif de décharge à effet couronne (11), dans la direction de transport de la matière plastique (1), se trouve disposé un troisième dispositif de décharge à effet couronne (19), qui comporte des électrodes (20) dont le boîtier (21) entoure les électrodes (20) et est relié, par l'intermédiaire d'une canalisation (22) à un atomiseur (23), dans lequel un gaz porteur pour un aérosol est introduit à partir d'un réservoir de gaz raccordé.

21. Dispositif selon la revendication 20, caractérisé en ce que les électrodes (4, 20) des premier et troisième dispositifs à décharge à effet couronne sont raccordées au générateur commun (5).

22. Dispositif selon la revendication 11, caractérisé en ce qu'il est prévu une buse à fente large (26), d'où une pellicule fondue d'une matière plastique (1) est extrudée sur un cylindre de refroidissement (25) formant contre-électrode pour les électrodes (4) du premier dispositif de décharge à effet couronne (11), et que le boîtier (6) de protection des électrodes (4) est agencé de sorte qu'il se raccorde directement à la buse à fente large (26).

23. Dispositif pour réaliser le prétraitement de surface d'une matière plastique à l'aide d'une décharge électrique à effet couronne, comportant des électrodes alimentées par un générateur fournissant un courant alternatif à haute fréquence et à haute tension, les électrodes étant disposées à une certaine distance d'une contre-électrode raccordée à la terre, caractérisé en ce qu'un tube de support métallique (27 ou 32) comporte, sur sa face extérieure, des électrodes (30) possédant la configuration d'un ensemble de brosses et est inséré à l'intérieur d'un corps moulé (31) réalisé en une matière plastique, que le tube de support (27 ou 32) est raccordé au générateur (5) et est relié à un atomiseur (8) servant à atomiser un liquide pour former un aérosol, et qu'un ventilateur réglable (9) entraîne le gaz porteur prévu pour l'aérosol, dans l'atomiseur (8).

24. Dispositif selon la revendication 23, caractérisé en ce que le tube de support (27) possède une extrémité ouverte, par laquelle l'aérosol pénètre à l'intérieur du corps moulé (31), qui est réalisé en une matière plastique et entoure le tube de support au voisinage des électrodes (30).

25. Dispositif selon la revendication 23, caractérisé en ce que le tube de support (32) comporte des trous (33) ménagés dans sa paroi et possède une extrémité fermée et qu'un aérosol pénètre, par l'intermédiaire des trous (32), à l'intérieur du corps moulé (31) réalisé en matière plastique, qui entoure le tube de support (32) au voisinage des électrodes (30).

26. Dispositif selon la revendication 23, caractérisé en ce que les électrodes (30) du tube de support (27 ou 32) ont une configuration géométrique adaptée aux contours intérieurs du corps moulé (31).

27. Dispositif selon la revendication 23, caractérisé en ce que les électrodes (30) sont constituées par des matériaux élastiques électriquement conducteurs, comme par exemple des fils métalliques ou des fibres de carbone.

28. Dispositif selon la revendication 23, caractérisé en ce que le corps moulé (31) est maintenu serré dans deux éléments de moule métalliques (28a, 28b), dont l'un (28b) est raccordé à la terre en tant que contre-électrode pour les électrodes (30) et que l'intérieur des éléments de moule (28a, 28b) est adapté aux contours extérieurs du corps moulé (31).

Fig.1

EP 0 279 371 B1

Fig. 2

Fig. 3

EP 0 279 371 B1

Fig. 4

Fig. 5a

Fig. 5b

5

9

8

27

31

29

28a

30

28b

32

33

33

30

EP 0 279 371 B1